# EUROPEAN PATENT APPLICATION

(11) **EP 0 893 589 A2**
(43) Date of publication of application: **27.01.1999**
(21) Application number: 98305566.6
(22) Date of filing: 13.07.1998
(51) Int. Cl.: F02C 7/25, F02C 7/32

(54) **Gas turbine engine with fire protection barrier**

(30) Priority: 24.07.1997 GB 9715543
(71) Applicant: LUCAS INDUSTRIES PUBLIC LIMITED COMPANY, Solihull B90 4LA (GB)
(72) Inventor: Webster, Steven John, Tamworth, Staffordshire, B77 1JR (GB)
(74) Representative: Waite, Anthony William

(57) **Abstract**

A gas turbine engine incorporates a fire protection barrier (5) between an operational unit (3) and a potential fire source. The barrier is provided with through openings (6) sized and arranged to permit a desired air flow through the barrier during normal operation, whilst largely or entirely precluding the passage of flame through the barrier in the event of a fire at said source.

## Description

This invention relates to a gas turbine engine, primarily for use in aircraft, having an operational unit mounted in the region of a potential fire source.

In the environment of a gas turbine engine, it is desirable to provide protection for a vulnerable unit against damage or destruction by flames in the event of an adjacent fire and one known way of achieving this is to provide a solid barrier of metal or other suitable material between the unit and a potential fire source to protect the unit from the direct impingement of flame thereon. Although such an arrangement can provide a degree of fire protection, it has the inconvenience of disrupting the flow of cooling air around the unit during normal operation.

According to the invention, a gas turbine engine incorporates a fire protection barrier between an operational unit and a potential fire source, the barrier having openings therethrough sized and arranged to permit a desired air flow through the barrier during normal operation, whilst largely or entirely precluding the passage of flame through the barrier in the event of a fire at said source.

Preferably, at least a major part of the barrier is in the form of a perforated plate or mesh sheet, which may conveniently be generally planar or curvate.

Typically, the barrier is shaped and arranged to deflect flame from the fire source away from the unit.

Conveniently, at least a part of the barrier may be coated with heat responsive intumescent or other suitable material, which acts, in the event of fire, to reduce the size of or close the openings on the coated part and thereby create a substantially solid barrier.

An embodiment of the invention will now be described, by way of example, with reference to the accompanying diagrammatic drawing.

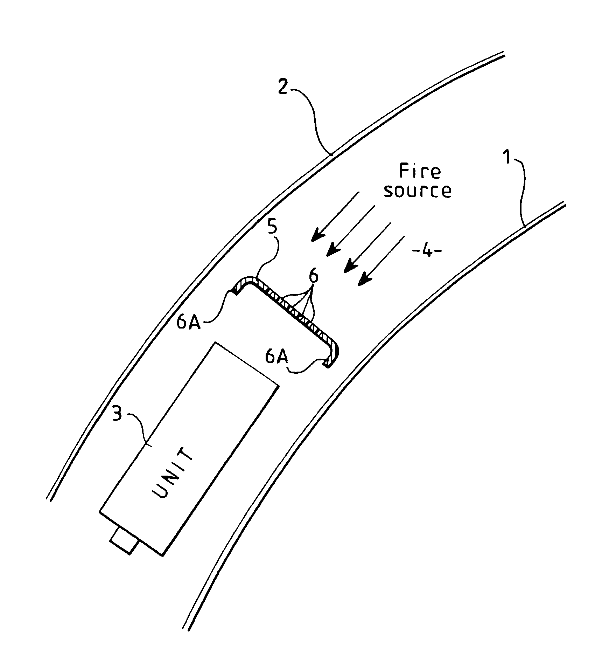

The drawing illustrates part of a gas turbine engine with part of the engine fancase designated 1 and part of a cowl access door 2. A unit, typically an electronic control unit 3 is disposed in the space 4 between the cowl and fancase and normally mounted on or adjacent to the fancase by way of brackets, for example (not shown). Cooling air normally flows in the space 4 during operation of the engine and is important to prevent overheating of the relatively heat-sensitive unit 3.

A flame barrier, illustrated as a baffle 5, is mounted in a suitable manner between the unit 3 and a potential fire source. The baffle may be mounted on the unit mounting brackets, if present, or directly on the unit. At least a part of the baffle 5 is provided with openings 6 therethrough which are sized and arranged to ensure that a necessary flow of air through the baffle is permitted during normal operation of the engine, but that, in the event of a fire, flames are wholly or largely prevented from impinging directly on the unit, enabling the latter to maintain its function for as long as possible in such adverse conditions.

The baffle 5 is preferably shaped and positioned so that, in addition to acting as a flame barrier, it also serves to deflect flame around and wide of the unit as a further protective measure. To this end, in the example illustrated, it is provided with lateral arms 6A extending towards the unit 3. Although the illustrated arms 6A are mutually parallel, they could be mutually divergent or arranged in any other convenient configuration to achieve the required deflective effect.

The simplest form of baffle would incorporate an area of wire mesh or perforate plate, but the required openings in the baffle may be provided in any other convenient manner, as in a honeycomb construction or an assembly having a plurality of short tubes having their axes arranged in a direction between the unit and flame source. In an alternative form, the baffle may comprise two or more separate elements having openings therethrough, the elements being mounted one behind the other, either in mutual contact or spaced from each other in an appropriate manner. The size, shape and position of the baffle, as well as the size and arrangement of openings are chosen to provide the optimum balance between air flow through the baffle and fire protection.

It may be advantageous to block the openings in the event of a fire, when obstructing the flames is a greater priority than air flow. One way of achieving this may be to paint the baffle with intumescent paint or coat it with other suitable material which can change its state when heated so as to reduce or block the openings and create a substantially solid barrier.

## Claims

1. A gas turbine engine comprises a fire protection barrier (5) arranged between an operational unit (3) and a potential fire source (F), the barrier having openings (6) therethrough sized and arranged to permit a desired air flow through the barrier during normal operation, whilst largely or entirely precluding the passage of flame through the barrier in the event of a fire at said source (F).

2. A gas turbine engine according to Claim 1, wherein at least a major part of the barrier is in the form of a perforated plate or mesh sheet (5).

3. A gas turbine engine according to Claim 2, wherein said major part of the barrier is planar or curvate.

4. A gas turbine engine according to any one of the preceding claims, wherein the barrier is shaped and arranged to deflect flame from the fire source away from the unit.

5. A gas turbine engine according to any one of Claims 2 to 4, wherein the barrier is provided with lateral arms (6A) extending towards the unit.

6. A gas turbine engine according to Claim 5, wherein said lateral arms (6A) are parallel.

7. A gas turbine engine according to any one of the preceding claims, wherein at least a part of the barrier is coated with heat responsive intumescent or other suitable material which acts, in the event of fire, to reduce the size of or close the openings on the coated part and thereby create a substantially solid barrier.
